# FASCICULE DE BREVET EUROPEEN

(11) **EP 1 301 089 B1**
(45) Date de publication et mention de la délivrance du brevet: **07.09.2005**
(21) Numéro de dépôt: 01903959.3
(22) Date de dépôt: 16.01.2001
(51) Int. Cl.: A23L 1/216, A23L 1/217

(54) **PATE CRUE HYPERPROTEINEE ET HYPOCALORIQUE POUR LA FABRICATION DE PRODUITS IMITANT LES PRODUITS A BASE DE POMME DE TERRE, ET SON PROCEDE DE PREPARATION**
PROTEINHYPERREICHES UND HYPOKALORISCHES GEFRORENES UNGEKOCHTES ESSBARES TEIGES ZUR HERSTELLUNG VON KARTOFFELÄHNLICHEN PRODUKTE UND VERFAHREN ZU IHREM HERSTELLUNG
HIGH PROTEIN AND LOW CALORIE RAW BATTER FOR MAKING PRODUCTS RESEMBLING POTATO-BASED PRODUCTS, AND METHOD FOR PREPARING SAME

(30) Priorité: 24.05.2000 WO PCT/FR00/01409
(43) Date de publication de la demande: 16.04.2003
(73) Titulaire: CEPRODI-Compagnie Européenne de Produits Diététiques, 75008 Paris (FR)
(72) Inventeur: Allouche, Réginald, 75006 Paris (FR)
(74) Mandataire: Boulinguiez, Didier
(86) Numéro de dépôt international: PCT/FR2001/000129
(87) Numéro de publication internationale: WO 2001/089325

(56) Documents cités:
- EP-A- 0 888 725
- FR-A- 2 787 296
- GB-A- 1 232 497
- GB-A- 1 350 547
- GB-A- 1 358 097
- US-A- 3 911 142
- US-A- 4 183 966
- US-A- 5 061 507
- DATABASE WPI Section Ch, Week 197901 Derwent Publications Ltd., London, GB; Class D13, AN 1979-01084B XP002179120 & JP 53 133657 A (NISSHIN OIL MILLS LTD), 21 novembre 1978 (1978-11-21)
- DATABASE WPI Section Ch, Week 197738 Derwent Publications Ltd., London, GB; Class D13, AN 1977-68020Y XP002179121 & JP 52 096765 A (NISSHIN OIL MILLS LTD), 13 août 1977 (1977-08-13)

## Description

La présente invention a pour objet une préparation alimentaire sous forme de pâte crue, apte à être mise en forme, notamment en bâtonnets, boules, galettes ou portions, généralement réfrigérée ou surgelée, destinée à être cuite directement au moment de la consommation afin de conduire à l'obtention de produits contretypant ou évoquant les produits traditionnels à base de pomme de terre, comme par exemple les frites, pommes dauphine, pommes noisette, "rösti" ou galettes de pomme de terre, ladite préparation alimentaire présentant une teneur élevée en protéines et une teneur faible en glucides et en lipides.

L'invention concerne également une préparation alimentaire sous forme de bâtonnets, de boules, de galettes ou de portions, n'ayant subi aucun traitement de cuisson ou de précuisson, destinée à la préparation, par cuisson, de produits contretypant ou évoquant les produits traditionnels à base de pomme de terre, obtenue par mise en forme de la préparation alimentaire sous forme de pâte crue.

Le document US-A-5 061 507 décrit une pâte alimentaire et sa méthode de préparation.

Les produits traditionnels précités à base de pomme de terre sont par excellence des produits réputés anti-régime car, même s'ils ne contiennent pas forcément au départ une teneur élevée en lipides, leur préparation nécessite obligatoirement une pré-cuisson ou une cuisson dans une, ou à l'aide d'une matière grasse, végétale ou animale. C'est évidemment le cas des frites cuites dans un bain d'huile ou de matière grasse végétale, ou des galettes de pomme de terre qui, si elles peuvent simplement être réchauffées dans une poêle anti-adhésive, ont vu une étape de pré-cuisson en présence de matière grasse lors de leur préparation.

S'il est évident que les consommateurs sont de plus en plus attentifs à leur apparence physique et qu'ils ne veulent donc pas prendre de poids, il est également vrai qu'ils souhaitent cependant continuer à manger en se faisant plaisir, c'est-à-dire en mangeant à satiété des produits gustatifs. Ils sont de ce fait de plus en plus conduits à se tourner vers de multiples régimes dits "minceur", qui se caractérisent le plus généralement par un moindre apport calorique quotidien, obtenu par une moindre quantité d'aliments ingérés associée le plus souvent à une réduction de la teneur en lipides.

Malheureusement, ces régimes sont difficiles à observer sur une longue période et entraînent une perte de poids liée à une perte de masse musculaire (i.e. masse maigre). On observe alors un manque de tonicité et d'élasticité de la peau, et une asthénie physique et intellectuelle. En outre, les personnes suivant à la lettre ces régimes ne mangent pas autant qu'elles le souhaiteraient et souffrent donc de la faim et éprouvent des frustrations.

Il existe de ce fait un besoin de disposer de produits de régime qui, tout en étant hypocaloriques, n'entraînent pas les conséquences néfastes indiquées ci-dessus et qui permettent au consommateur de suivre un régime avec plaisir, c'est-à-dire qui lui permettent de manger à satiété et de perdre sa masse grasse, sans que ce soit au détriment de sa masse maigre.

Il est reconnu qu'il est nécessaire d'apporter à l'organisme, lors de ces périodes de réductions caloriques, un apport minimum et suffisant en protéines de haute valeur nutritionnelle et biologique.

Mais cette contrainte supplémentaire complique encore l'exercice de formulation de compositions alimentaires qui soient à la fois hypocaloriques, industrialisables, organoleptiquement satisfaisantes, stables au point du vue du vieillissement et qui soient aisées à préparer, sans adjonction de matière grasse.

Or, il est du mérite du Demandeur d'avoir réussi à mettre au point, après de nombreux essais, une préparation alimentaire qui, une fois préparée par le consommateur, évoque ou contretype les produits traditionnels à base de pomme de terre, et qui soit en même temps hyperprotéinée, hypocalorique, organoleptiquement satisfaisante, stable au point de vue texture, et facile à préparer.

Ladite préparation alimentaire se présente sous forme de pâte crue généralement réfrigérée ou surgelée, destinée à être cuite directement peu avant ou au moment de la consommation.

Cette pâte peut être mise en forme de bâtonnets, de boules, de galettes, par exemple avant la réfrigération ou la surgélation, ou peut être vendue sous forme de pâtons destinés à être mis en forme de crêpes ou de galettes par exemple, directement chez le consommateur ou l'utilisateur final, peu avant la cuisson.

Cette pâte est caractérisée par le fait qu'elle présente, les pourcentages étant exprimés en poids sur poids par rapport au produit commercial :
- une teneur en protéines (mesurée en N×6.25) comprise entre 14 et 30 %, de préférence entre 18 et 28 % et plus préférentiellement encore entre 20 et 26 %,
- une teneur en glucides comprise entre 3 et 15 %, de préférence entre 3 et 13 %, et plus préférentiellement encore entre 3 et 12.5 %,
- une teneur en lipides comprise entre 0.5 et 5 %, de préférence entre 0.5 et 4 %, et plus préférentiellement encore entre 0.9 et 3.7 %,
- une teneur en eau de 40 à 70 %.

La valeur calorique totale du produit commercial se situe entre 130 et 230 kcal/100 g, de préférence entre 130 et 190 kcal/100 g et plus préférentiellement encore entre 132 et 180 kcal/100 g.

La pâte alimentaire selon l'invention est également caractérisée par le fait que son indice chimique est supérieur à 100. Il est rappelé qu'on entend par indice chimique d'une protéine le produit par 100 du plus petit des quotients obtenus en divisant, pour chacun des acides aminés essentiels ou groupes d'acides aminés essentiels, la quantité présente dans 100 g de cette protéine par la quantité correspondante présente dans 100 g de la protéine servant de référence, celle-ci étant caractérisée par les teneurs suivantes rapportées à 100 g :
- L isoleucine 4 g
- L leucine 7 g
- L lysine 5,5 g
- DL méthionine + L cystine 3,5 g
- L phénylalamine + L tyrosine 6 g
- L thréonine 4 g
- L tryptophane 1 g
- L valine 5 g

Les protéines utilisées pour la constitution de la pâte alimentaire conforme à l'invention peuvent être d'origine animale et/ou végétale.

On préfère utiliser les protéines laitières, telles que la caséine, les caséinates, la protéine laitière totale, la lactalbumine, le lactosérum ; les protéines d'oeuf ; les protéines de soja, de pois, de lupin ou de blé notamment.

Comme glucides, on peut utiliser tous les types d'amidons, de toute provenance, natifs ou modifiés, notamment l'amidon de maïs, la fécule de pomme de terre, la fécule de manioc, les flocons de pomme de terre ; les sucres et les polyols.

Comme lipides, on préfère utiliser des poudres de matières grasses de coprah, de palme, de soja ou de tournesol.

Bien entendu, la pâte conforme à l'invention peut également contenir d'autres ingrédients conventionnels tels que des arômes, des épaississants, des acides aminés, des épices, des condiments, des exhausteurs de goût, des colorants, des vitamines, des minéraux, des fibres solubles ou insolubles comme notamment l'inuline ou les polymères de glucose ou de fructose, des poudres levantes et des édulcorants intenses ; et peut renfermer en outre des morceaux ou de la poudre de légumes, de viandes, de poissons, de fromages ou de fruits.

Selon une réalisation préférentielle, la pâte selon l'invention contient, en pourcentage de poids par rapport au produit commercial :
- de 10 à 30 %, de préférence de 14 à 28 %, et plus préférentiellement encore de 17 à 25 % de protéines de lait,
- de 2 à 12 %, de préférence de 2.5 à 10 %, et plus préférentiellement encore de 3 à 10 % de flocons de pomme de terre,
- un liant tel que la poudre d'oeuf entière ou le blanc d'oeuf, en une quantité généralement comprise entre 2 et 10 %, de préférence entre 2.5 et 9 %, et plus préférentiellement encore entre 2.8 et 7 %,
- au moins un épaississant, choisi de préférence parmi les gommes (guar, caroube, carraghénane, alginate, xanthane, ...) et les amidons, notamment les amidons prégélatinisés ou extrudés, cet épaississant étant présent le plus généralement en une quantité comprise entre 0.5 et 3 %, de préférence entre 0.8 et 2.5 %, et plus préférentiellement encore entre 1 et 2.3 %,
- de l'eau, en une quantité comprise entre 42 et 70 %, de préférence de 45 à 70 %,
- un ou plusieurs arômes, en une quantité généralement comprise entre 0.2 et 4 %, de préférence entre 0.3 et 3.5 %, et plus préférentiellement encore entre 0.8 et 3.2 %.

L'invention a également pour objet le procédé de préparation de la pâte alimentaire selon l'invention, ce procédé comprenant les étapes suivantes :
- sélection des ingrédients, pesée et dosage, lesdits ingrédients étant pour la plupart sous forme de poudres,
- mélange intime de ces ingrédients, avec ou sans prémélange,
- addition d'eau dans ledit mélange, sous agitation modérée et régulière, par exemple dans un pétrin, afin de conduire à la formation d'une pâte liée et homogène,
- formage,
- éventuellement traitement de réfrigération ou de surgélation.

L'étape de formage pourra consister notamment en un laminage suivi d'un découpage ou de mise en portions individualisées telles que frites, pommes dauphines, minigalettes..., ou pourra consister simplement en une mise sous forme de pâtons, ceux-ci étant mis en forme directement chez l'utilisateur final.

Il est important de souligner que le procédé selon l'invention ne prévoit pas d'étape de cuisson ou de précuisson. Le produit final est donc préparé directement chez l'utilisateur, par cuisson au four, à la poêle ou par cuisson infra-rouge.

L'invention pourra être mieux comprise à l'aide des exemples qui suivent, qui sont donnés à titre purement illustratif.

### EXEMPLE 1 :

Une pâte alimentaire crue conforme à l'invention est préparée à partir de la formulation présentée dans le tableau 1 suivant.

**Tableau 1**

| **Ingrédients** | **% en poids** |
|---|---|
| Arôme NN0833 (SOCIÉTÉ QUEST) | 0.62 |
| Bicarbonate de sodium | 0.15 |
| Caséinate de sodium 220 (SOCIÉTÉ EPI INGRÉDIENT) | 10.96 |
| Farine de lupin doux (CANA) | 1.55 |
| Fibre ID 60 (SOCIÉTÉ ARNAUD) | 1.55 |
| Gomme Isaguar (SOCIÉTÉ DISATEC) | 0.62 |
| L méthionine (SOCIÉTÉ QUIMDIS) | 0.06 |
| OEuf en poudre (SOCIÉTÉ OVONOR) | 2.49 |
| Flocons de pomme de terre | 7.57 |
| Fibres Profiber PTF (SOCIÉTÉ FPS) | 1.87 |
| Pyrophosphate de sodium | 0.31 |
| Sel | 0.62 |
| Vana Grassa 80C093 (SOCIÉTÉ ARNAUD) | 0.93 |
| Protéines de soja 90HDS (SOCIÉTÉ LUCAS MEYER) | 1.86 |
| Eau | 68.84 |
| Teneur totale en protéines | 14.21 |
| Teneur totale en glucides | 6.73 |
| Teneur totale en lipides | 2.27 |

La pâte obtenue par mélange des différents ingrédients et de la teneur choisie en eau présente une texture assez lisse, sans grumeaux. Elle est homogène mais donne, après pétrissage, une pâte légèrement trop dure. Dans cette formulation, la protéine est constituée en majorité de protéines de lait mais des protéines de soja sont ajoutées car elles permettent l'obtention d'une certaine rétention d'eau. La farine de lupin permet de créer un réseau dans la pâte, qui est de ce fait plus homogène. Le taux de bicarbonate de sodium est suffisant. Il a été constaté que son augmentation, dans des proportions trop importantes, entraînait un trop grand gonflement lors de la cuisson de la pâte alimentaire.

Un test organoleptique effectué par un panel de dégustateurs sur les frites formées à partir de la pâte alimentaire et cuites au four traditionnel, laisse apparaître un goût végétal légèrement trop prononcé. Par ailleurs, lors de la préparation des produits formés, il a été constaté un léger collage lors de l'étape de laminage.

### EXEMPLE 2 :

Une autre formulation (voir composition dans le tableau 2 qui suit) est donc préparée avec pour objectif de réduire le collage lors de l'étape de laminage et afin d'améliorer le goût.

Un autre arôme est utilisé (arôme DF11664 de la SOCIÉTÉ QUEST) en une teneur plus élevée, et la teneur en flocons de pomme de terre est augmentée de 7.57 % à 8.15 %.

Afin de réduire la dureté de la pâte, la teneur en fibres (PROFIBER et fibres ID60) est légèrement réduite et compensée partiellement par une légère augmentation de la teneur en Vana Grassa, qui apporte de l'onctuosité. La teneur en protéines est également augmentée, par élévation du taux de protéines de soja et de caséinate de sodium, ce qui permet de réduire le collage au laminage grâce à la forte capacité d'absorption d'eau de ces protéines.

**Tableau 2**

| **Ingrédients** | **% en poids** |
|---|---|
| Arôme DF11664 (SOCIÉTÉ QUEST) | 1.06 |
| Bicarbonate de sodium | 0.17 |
| Caséinate de sodium 220 (SOCIÉTÉ EPI INGRÉDIENT) | 14.53 |
| Farine de lupin doux (CANA) | 1.59 |
| Fibre protéine ID 60 (SOCIÉTÉ ARNAUD) | 0.88 |
| Gomme Isaguar (SOCIÉTÉ DISATEC) | 0.81 |
| L méthionine (SOCIÉTÉ QUIMDIS) | 0.07 |
| OEuf en poudre (SOCIÉTÉ OVONOR) | 2.48 |
| Flocons de pomme de terre | 8.15 |
| Profiber PTF (SOCIÉTÉ FPS) | 1.06 |
| Pyrophosphate de sodium | 0.28 |
| Sel | 0.63 |
| Vana Grassa 80C093 (SOCIÉTÉ ARNAUD) | 1.20 |
| Protéines de soja 90HDS (SOCIÉTÉ LUCAS MEYER) | 2.48 |
| Eau | 64.61 |
| Teneur totale en protéines | 17.87 |
| Teneur totale en glucides | 7.47 |
| Teneur totale en lipides | 2.5 |

La pâte obtenue à l'aide de cette formulation est homogène mais se révèle cependant trop friable et fragile, pas assez élastique et trop cassante. On note, lors de l'étape de laminage, un caractère légèrement friable sur le bord de la pâte laminée. La cuisson de la pâte alimentaire préformée sous forme de frites, effectuée au four traditionnel, permet d'obtenir une cuisson homogène.

Les frites ainsi fabriquées sont bien appréciées par le panel de dégustation, qui constate cependant encore un goût végétal légèrement trop prononcé.

### EXEMPLE 3 :

Une pâte alimentaire crue conforme à l'invention est préparée à partir des ingrédients listés dans le tableau 3 qui suit :

**Tableau 3**

| **Ingrédients** | **% en poids** |
|---|---|
| Arôme DF11664 (SOCIÉTÉ QUEST) | 2.73 |
| Bicarbonate de sodium | 0.09 |
| Caséinate de sodium 220 (SOCIÉTÉ EPI INGRÉDIENT) | 22.50 |
| Fécule de pomme de terre PJ30 | 0.45 |
| Inuline RAFTILINE GR (SOCIÉTÉ ARNAUD) | 2.27 |
| Gomme Isaguar (SOCIÉTÉ DISATEC) | 0.91 |
| L méthionine (SOCIÉTÉ QUIMDIS) | 0.11 |
| OEuf en poudre (SOCIÉTÉ OVONOR) | 3.18 |
| Flocons de pomme de terre | 9.32 |
| Sel | 1.23 |
| Vana Grassa 80C093 (SOCIÉTÉ ARNAUD) | 1.30 |
| Protéines de soja 90HDS (SOCIÉTÉ LUCAS MEYER) | 1.36 |
| Eau | 54.55 |
| Teneur totale en protéines | 23.32 |
| Teneur totale en glucides | 9.9 |
| Teneur totale en lipides | 2.7 |

Une pâte extrêmement homogène et ayant de bonnes propriétés texturales est obtenue à partir de cette formulation. La douceur et l'élasticité de la pâte ont été améliorées par l'addition d'inuline. La formulation présente l'avantage d'une teneur très élevée en protéines. L'aptitude au pétrissage est bonne mais pourrait encore être améliorée par une légère augmentation d'épaississants (gomme Isaguar). L'opération de laminage s'effectue de façon très satisfaisante, la pâte résistant bien et s'étirant suffisamment. La cuisson obtenue au four traditionnel révèle une cuisson homogène. La réduction du taux de fibre (ID60 et Profiber PTF) permet de réduire la friabilité.

Le test de dégustation effectué sur les frites préparées et cuites au four traditionnel donne des résultats extrêmement élogieux, les frites étant jugées par les dégustateurs comme ayant un bon goût et une bonne odeur et comme présentant un goût et un aspect très proches de la frite de pomme de terre traditionnelle.

On dispose ainsi, grâce à l'invention, de la possibilité de fabriquer des produits hyperprotéinés et hypocaloriques ne nécessitant pour leur cuisson aucune adjonction de matière grasse et présentant les caractères texturaux et organoleptiques des produits traditionnels à base de pomme de terre. Ces produits peuvent être préparés facilement, et peuvent être vendus sous forme réfrigérée ou surgelée, pour une cuisson très aisée directement par le consommateur, par exemple au four traditionnel ou sur une poêle à revêtement anti-adhérant.

Bien entendu, les différents ingrédients cités et leurs teneurs respectives peuvent être modifiés sans pour autant sortir du cadre de l'invention.

## Revendications

1. Préparation alimentaire sous forme de pâte crue apte à être mise en forme, notamment en bâtonnets, boules, galettes ou portions, destinée à être cuite directement au moment de la consommation et permettant l'obtention de produits contretypant ou évoquant les produits traditionnels à base de pomme de terre, présentant une teneur en protéines comprise entre 14 et 30 %, une teneur en glucides comprise entre 3 et 15 %, une teneur en lipides entre 0,5 et 5 %, une teneur en eau de 40 à 70 %, ces pourcentages étant exprimés en poids pour poids par rapport au produit commercial, et un indice chimique supérieur à 100.

2. Préparation alimentaire sous forme de pâte crue selon la revendication 1, présentant une teneur en liant comprise entre 2 et 10 %, de préférence entre 2.5 et 9 %, et plus préférentiellement encore entre 2.8 et 7 %, ces pourcentages étant exprimés en poids pour poids par rapport au produit commercial.

3. Préparation alimentaire sous forme de pâte crue selon l'une ou l'autre des revendications 1 et 2, présentant une teneur en protéines comprise entre 18 et 28 %, de préférence entre 20 et 26 %, une teneur en glucides comprise entre 3 et 13 %, de préférence entre 3 et 12.5 %, et une teneur en lipides comprise entre 0.5 et 4 %, de préférence entre 0.9 et 3.7 %, ces pourcentages étant exprimés en poids pour poids par rapport au produit commercial.

4. Préparation alimentaire sous forme de pâte crue selon l'une quelconque des revendications 1 à 3, **caractérisée par le fait qu'**elle présente une valeur calorique totale comprise entre 130 et 230 Kcalories par 100 g, de préférence entre 130 et 190 Kcalories par 100 g, et plus préférentiellement encore entre 132 et 180 Kcalories par 100 g.

5. Préparation alimentaire sous forme de pâte crue selon l'une quelconque des revendications 1 à 4, **caractérisée par le fait qu'**elle comprend de 10 à 30 %, de préférence de 14 à 28 %, et plus préférentiellement encore de 17 à 25 % de protéines de lait.

6. Préparation alimentaire sous forme de pâte crue selon l'une quelconque des revendications 1 à 5, **caractérisée par le fait qu'**elle présente une teneur de 2 à 12 %, de préférence de 2.5 à 10 %, et plus préférentiellement encore de 3 à 10 % de flocons de pomme de terre.

7. Préparation alimentaire sous forme de pâte crue selon l'une quelconque des revendications 2 à 6, **caractérisée par le fait que** le liant est constitué par de la poudre d'oeuf entière ou du blanc d'oeuf.

8. Préparation alimentaire sous forme de pâte crue selon l'une quelconque des revendications 1 à 7, **caractérisée par le fait qu'**elle contient un épaississant, choisi de préférence parmi les gommes et les amidons, ledit épaississant étant présent en une quantité comprise entre 0.5 et 3 %, de préférence entre 0.8 et 2.5 %, et plus préférentiellement encore entre 1 et 2.3 %.

9. Préparation alimentaire sous forme de pâte crue selon l'une quelconque des revendications 1 à 8, présentant une teneur en eau comprise entre 42 et 70 %, de préférence entre 45 et 70 %.

10. Préparation alimentaire sous forme de pâte crue selon l'une quelconque des revendications 1 à 9, **caractérisée par le fait qu'**elle contient un ou plusieurs arômes, en une quantité comprise entre 0.2 et 4 %, de préférence entre 0.3 et 3.5 %, et plus préférentiellement encore entre 0.8 et 3.2 %.

11. Procédé de préparation de la pâte alimentaire sous forme de pâte crue selon l'une quelconque des revendications 1 à 10, **caractérisé par le fait qu'**il comprend les étapes suivantes :
- sélection des ingrédients, pesée et dosage,
- mélange intime desdits ingrédients, avec ou sans prémélange,
- addition d'eau dans ledit mélange, sous agitation modérée et régulière, notamment dans un pétrin, afin de conduire à la formation d'une pâte liée et homogène,
- formage,
- éventuellement traitement de réfrigération ou de surgélation.

12. Procédé selon la revendication 11, **caractérisé par le fait que** l'étape de formage consiste en un laminage suivi d'un découpage ou d'une mise en portions individualisées telles que frites, pommes dauphine, minigalettes.

13. Préparation alimentaire sous forme de bâtonnets, de boules, de galettes ou de portions, n'ayant subi aucun traitement de cuisson ou de précuisson, destinée à la préparation, par cuisson, de produits contretypant ou évoquant les produits traditionnels à base de pomme de terre, obtenue par mise en forme de la préparation alimentaire sous forme de pâte crue selon l'une quelconque des revendications 1 à 10.

## Patentansprüche

1. Nahrungsmittel-Präparat in Form von rohem Teig, das geeignet ist, insbesondere zu Stäbchen, Kugeln, Galettes oder Portionen geformt zu werden, das dazu bestimmt ist, direkt zum Zeitpunkt des Verzehrs gekocht, gebraten bzw. gebacken zu werden, und das den Erhalt von Produkten, die contratypisch sind oder an traditionelle Produkte auf der Grundlage von Kartoffeln erinnern, ermöglicht, das einen Gehalt an Proteinen zwischen 14 und 30 %, einen Gehalt an Gluciden zwischen 3 und 15 %, einen Gehalt an Lipiden zwischen 0,5 und 5 %, einen Gehalt an Wasser von 40 bis 70 %, wobei diese Prozentangaben als Gewicht pro Gewicht, bezogen auf das Handelsprodukt, ausgedrückt sind, und einen chemischen Index von über 100 aufweist.

2. Nahrungsmittel-Präparat in Form von rohem Teig nach Anspruch 1, das einen Gehalt an Bindemittel zwischen 2 und 10 %, vorzugsweise zwischen 2,5 und 9 % und noch bevorzugter zwischen 2,8 und 7 % aufweist, wobei diese Prozentangaben als Gewicht pro Gewicht, bezogen auf das Handelsprodukt, ausgedrückt sind.

3. Nahrungsmittel-Präparat in Form von rohem Teig nach Anspruch 1 oder Anspruch 2, das einen Gehalt an Proteinen zwischen 18 und 28 %, vorzugsweise zwischen 20 und 26 %, einen Gehalt an Gluciden zwischen 3 und 13 %, vorzugsweise zwischen 3 und 12,5 % und einen Gehalt an Lipiden zwischen 0,5 und 4 %, vorzugsweise zwischen 0,9 und 3,7 % aufweist, wobei diese Prozentangaben als Gewicht pro Gewicht, bezogen auf das Handelsprodukt, ausgedrückt sind.

4. Nahrungsmittel-Präparat in Form von rohem Teig nach einem der Ansprüche 1 bis 3, **dadurch gekennzeichnet, dass** es einen Gesamtbrennwert zwischen 130 und 230 Kilokalorien pro 100 g, vorzugsweise zwischen 130 und 190 Kilokalorien pro 100 g und noch bevorzugter zwischen 132 und 180 Kilokalorien pro 100 g aufweist.

5. Nahrungsmittel-Präparat in Form von rohem Teig nach einem der Ansprüche 1 bis 4, **dadurch gekennzeichnet, dass** es 10 bis 30 %, vorzugsweise 14 bis 28 % und noch bevorzugter 17 bis 25 % Milchproteine umfasst.

6. Nahrungsmittel-Präparat in Form von rohem Teig nach einem der Ansprüche 1 bis 5, **dadurch gekennzeichnet, dass** es einen Gehalt von 2 bis 12 %, vorzugsweise 2,5 bis 10 % und noch bevorzugter von 3 bis 10 % an Kartoffelflocken aufweist.

7. Nahrungsmittel-Präparat in Form von rohem Teig nach einem der Ansprüche 2 bis 6, **dadurch gekennzeichnet, dass** das Bindemittel aus Pulver von Vollei oder Eiweiß besteht.

8. Nahrungsmittel-Präparat in Form von rohem Teig nach einem der Ansprüche 1 bis 7, **dadurch gekennzeichnet, dass** es ein Verdickungsmittel enthält, das vorzugsweise unter den Gummi und den Stärken ausgewählt ist, wobei das Verdickungsmittel in einer Menge zwischen 0,5 und 3 %, vorzugsweise zwischen 0,8 und 2,5 % und noch bevorzugter zwischen 1 und 2,3 %, vorliegt.

9. Nahrungsmittel-Präparat in Form von rohem Teig nach einem der Ansprüche 1 bis 8, das einen Gehalt an Wasser zwischen 42 und 70 %, vorzugsweise zwischen 45 und 70 % aufweist.

10. Nahrungsmittelpräparat in Form von rohem Teig nach einem der Ansprüche 1 bis 9, **dadurch gekennzeichnet, dass** es einen Aromastoff oder mehrere Aromastoffe in einer Menge zwischen 0,2 und 4 %, vorzugsweise zwischen 0,3 und 3,5 und noch bevorzugter zwischen 0,8 und 3,2 % umfasst.

11. Verfahren zur Herstellung des Nahrungsmittelteigs in Form von rohem Teig nach einem der Ansprüche 1 bis 10, **dadurch gekennzeichnet, dass** es die folgenden Stufen umfasst:
- Auswahl der Ingredienzien, Abwiegen und Dosierung,
- inniges Vermischen der Ingredienzien mit oder ohne Vormischen,
- Zusatz von Wasser zu dem Gemisch unter moderatem und gleichmäßigem Rühren, insbesondere in einer Knetmaschine, um die Bildung eines gebundenen und homogenen Teigs durchzuführen,
- Formen,
- gegebenenfalls Kühlungsbehandlung oder Gefrierbehandlung.

12. Verfahren nach Anspruch 11, **dadurch gekennzeichnet, dass** die Stufe des Formens in einem Walzen, gefolgt von einem Schneiden oder einem Herstellen von einzelnen Portionen wie Pommes Frites, Pommes Dauphine, Minigalettes besteht.

13. Nahrungsmittel-Präparat in Form von Stäbchen, Kugeln, Galettes oder Portionen, das keiner Koch-, Brat- oder Back-Behandlung oder Vorkochbehandlung unterzogen wurde, das zur Herstellung von contratypischen Produkten oder von Produkten, die an traditionelle Produkte auf der Grundlage von Kartoffeln erinnern, durch Kochen, Braten oder Backen bestimmt ist und das durch Formen des Nahrungsmittel-Präparats in Form von rohem Teig nach einem der Ansprüche 1 bis 10 erhalten wird.

## Claims

1. A food preparation in the form of raw dough capable of being shaped, in particular into sticks, balls, patties or portions designed to be directly cooked at the time of consumption and allowing the production of products copying or resembling traditional potato-based products, having a protein content of between 14 and 30%, a carbohydrate content of between 3 and 15%, a lipid content of between 0.5 and 5%, a water content of 40 to 70%, these percentages being expressed by weight per weight relative to the commercial product, and a chemical index greater than 100.

2. The food preparation in the form of raw dough as claimed in claim 1, having a binder content of between 2 and 10%, preferably between 2.5 and 9%, and still more preferably between 2.8 and 7%, these percentages being expressed by weight per weight relative to the commercial product.

3. The food preparation in the form of raw dough as claimed in any of claims 1 and 2, having a protein content of between 18 and 28%, preferably between 20 and 26%, a carbohydrate content of between 3 and 13%, preferably between 3 and 12.5%, and a lipid content of between 0.5 and 4%, preferably between 0.9 and 3.7%, these percentages being expressed by weight per weight relative to the commercial product.

4. The food preparation in the form of raw dough as claimed in any one of claims 1 to 3, **characterized in that** it has a total calorie value of between 130 and 230 Kcalories per 100 g, preferably between 130 and 190 Kcalories per 100 g, and still more preferably between 132 and 180 Kcalories per 100 g.

5. The food preparation in the form of raw dough as claimed in any one of claims 1 to 4, **characterized in that** it comprises from 10 to 30%, preferably from 14 to 28%, and still more preferably from 17 to 25% of milk proteins.

6. The food preparation in the form of raw dough as claimed in any one of claims 1 to 5, **characterized in that** it has a content of 2 to 12%, preferably of 2.5 to 10%, and still more preferably of 3 to 10% potato flakes.

7. The food preparation in the form of raw dough as claimed in any one of claims 2 to 6, **characterized in that** the binder consists of whole egg powder or egg white.

8. The food preparation in the form of raw dough as claimed in any one of claims 1 to 7, **characterized in that** it contains a thickener, preferably chosen from gums and starches, said thickener being present in a quantity of between 0.5 and 3%, preferably between 0.8 and 2.5%, and still more preferably between 1 and 2.3%.

9. The food preparation in the form of raw dough as claimed in any one of claims 1 to 8, having a water content of between 42 and 70%, preferably between 45 and 70%.

10. The food preparation in the form of raw dough as claimed in any one of claims 1 to 9, **characterized in that** it contains one or more flavorings, in a quantity of between 0.2 and 4%, preferably between 0.3 and 3.5%, and still more preferably between 0.8 and 3.2%.

11. A method for preparing the food dough in the form of raw dough as claimed in any one of claims 1 to 10, **characterized in that** it comprises the following steps:
- selecting the ingredients, weighing and measuring them out,
- intimately mixing these ingredients, with or without premixing,
- adding water to said mixture, with moderate and regular stirring, for example in a kneader, in order to lead to the formation of a bound and homogeneous dough,
- shaping,
- optionally treating by means of refrigeration or deep-freezing.

12. The method as claimed in claim 11, **characterized in that** the shaping step consists in laminating followed by cutting or shaping into individualized portions such as fries, dauphine potatoes or minipatties.

13. A food preparation in the form of sticks, balls, patties or portions, which has undergone no cooking or precooking treatment, designed for the preparation, by cooking, of products copying or resembling traditional potato-based products, which is obtained by forming the food preparation in the form of a raw dough as claimed in any one of claims 1 to 10.
